# EUROPÄISCHE PATENTSCHRIFT

(11) **EP 0 311 560 B1**
(45) Veröffentlichungstag und Bekanntmachung des Hinweises auf die Patenterteilung: **25.10.1995**
(21) Anmeldenummer: 88810655.6
(22) Anmeldetag: 26.09.1988
(51) Int. Cl.: C09B 67/22, C09B 67/20, C09D 11/00

(54) **Pigmentzusammensetzungen auf Basis von Acetoacetaryliden**
Pigment compositions based on acetoacetarylides
Compositions pigmentaires à base d'acétoacétarylides

(30) Priorität: 03.10.1987 GB 8723257; 14.10.1987 GB 8724085
(43) Veröffentlichungstag der Anmeldung: 12.04.1989
(73) Patentinhaber: CIBA-GEIGY AG, 4002 Basel (CH)
(72) Erfinder: Blackburn, John Bryce, Ayrshire KA 15 2EE Schottland (GB); Hamilton, Alexander, Glasgow Schottland G44 5AB (GB)

(56) Entgegenhaltungen:
- EP-A- 0 076 024
- FR-A- 2 084 544
- FR-A- 2 091 301
- US-A- 4 680 057

## Beschreibung

Die vorliegende Erfindung betrifft neue Pigmentzusammensetzungen, ihre Herstellung und ihre Verwendung zur Bereitstellung hoch konzentrierter Dispersionen und Tinten für moderne Offsetdruck- und Buchdruckfarben.

Zur Bereitstellung von Tinten mit annehmbaren koloristischen Leistungen auf dem Gebiet des modernen Offset- und Buchdruckes besteht ein Bedarf an Pigmentdispersionen mit hohen (35-50 Gewichtsprozent) Pigmentkonzentrationen in Lösungsmitteln auf Kohlenwasserstoffbasis und guter Rheologie.

In der britischen Patentschrift Nr. 1.356.253 werden für die Bereitstellung von Tinten mit annehmbaren koloristischen Leistungen Pigmentzusammensetzungen beschrieben, welche ein Diarylidpigment, einen wasserlöslichen Farbstoff und gegebenenfalls u.a. ein aliphatisches Amin mit ausgezeichneten Eigenschaften enthalten.

Dank ihren inhärenten guten Eigenschaften in Buchdruckfarben wurden bestimmte, unter den breiten Umfang dieser britischen Patentschrift fallende Produkte auch im anmeldungsgemäss in Frage kommenden Anwendungsgebiet untersucht. So ist eine Pigmentzusammensetzung, enthaltend a) ein Pigment, das durch Kupplung von tetrazotiertem 3,3′-Dichlorbenzidin mit einem Kupplungskomponentengemisch aus Acetoacet-2-methylanilid und Acetoacet-2,4-xylidid erhalten wurde, b) einen durch Kupplung tetrazotierter Benzidin-2,2′-disulfonsäure mit Acetoacet-2,4-xylidid erhaltenen Farbstoff und c) disproportioniertes Rosin, bei einer Pigmentkonzentration von 35 Gew.% knapp fliessend und zudem koloristisch schwach.

Eine Pigmentzusammensetzung, enthaltend a) ein Pigment, das durch Kupplung von tetrazotiertem 3,3′-Dichlorbenzidin mit einem Kupplungskomponentengemisch aus Acetoacet-2,4-xylidid und Acetoacet-2-chloranilid erhalten wurde, b) einen durch Kupplung tetrazotierter Benzidin-2,2′-disulfonsäure mit Acetoacet-2,4-xylidid gewonnen Farbstoff und c) das Calciumsalz des hydrierten disproportionierten Rosins, weist zwar eine adäquate Farbstärke und gute Offset- und Buchdruckfarben-Eigenschaften, jedoch nur eine adäquate Rheologie bei Pigmentkonzentration von 35 Gew.% oder weniger auf.

Auch eine Pigmentzusammensetzung, enthaltend a) ein Pigment, das durch Kupplung von tetrazotiertem 3,3′-Dichlorbenzidin mit Acetoacet-2,4-xylidid erhalten wurde, b) einen aus tetrazotierter Benzidin-2,2′-disulfonsäure und Acetoacet-2,4-xylidid erhaltenen Farbstoff und c) disproportioniertes Rosin, weist die gewünschte Rheologie bei hoher Pigmentkonzentration auf; das Produkt ist jedoch koloristisch zu schwach, um kommerziell interessant zu sein.

Ausserdem sind die gelben Zeitschriftendruckpigmente in hoch konzentrierten Dispersionen nich zufriedenstellend, da sie zu Problemen in Bezug auf die Kontrolle des Wassergehaltes auf der Drucker-Presse und bezüglich ihrer koloristischen Farbschwäche führen.

Es wurde nun gefunden, dass durch Auswahl einer bestimmten Kombination a) eines mit einem Farbstoff behandelten Pigmentes und b) eines mit einem Amin behandelten Pigmentes eine Pigmentzusammensetzung mit sowohl adäquater Rheologie bei hohen Pigmentkonzentrationen als auch guten rheologischen und Offset- und Buchdruckfarben-Eigenschaften erhalten wird.

Die vorliegende Erfindung betrifft demnach eine Pigmentzusammensetzung zur Verwendung in modernen Offset- und Buchdruckfarben und enthaltend
A)
   a) ein Pigment, das durch Kupplung von tetrazotiertem 3,3′-Dichlorbenzidin mit Acetoacet-2,4-xylidid oder von tetrazotiertem 3,3′-Dichlorbenzidin mit zwei oder mehreren der folgenden Kupplungskomponenten Acetoacetanilid, Acetoacet-2-anisidid, Acetoacet-2-toluidid, Acetoacet-2-chloranilid, Acetoacet-2,4-xylidid und Acetoacet-2,5-dimethoxy-4-chloranilid erhalten wird,
   b) einen durch Kupplung tetrazotierter Benzidin-2,2′-disulfonsäure mit Acetoacetanilid, Acetoacet-2-toluidid, Acetoacet-2-chloranilid oder Acetoacet-2,4-xylidid erhaltenen Farbstoff und gegebenenfalls
   c) ein Harz oder harzhaltiges Material, und
B)
   a) ein Pigment, das durch Kupplung einer oder mehreren der folgenden Kupplungskomponenten Acetoacetanilid, Acetoacet-2-anisidid, Acetoacet-2-toluidid, Acetoacet-4-toluidid, Acetoacet-2-chloranilid, Acetoacet-2,4-xylidid und Acetoacet-2,5-dimethoxy-4-chloranilid mit einer oder beiden der tetrazotierten Komponenten 3,3′-Dichlorbenzidin und 3,3′-Dimethoxybenzidin erhalten wird, und
   b) ein aliphatisches Amin,
wobei das Gewichtsverhältnis der Komponenten A) und B) in der Pigmentzusammensetzung zwischen 35:65 und 95:5 Gew.% liegt.

Beispielsweise liegt das Gewichtsverhältnis zwischen 35:65 und 90:10, vorzugsweise aber zwischen 40:60 und 60:40 Gew.%.

Als Pigmentkomponente A a) verwendet man bevorzugt das Gemisch aus der Kupplung von tetrazotiertem 3,3′-Dichlorbenzidin mit dem Gemisch Acetoacet-o-toluidid und Acetoacet-2,4-xylidid. Die Pigmente des Gemisches weisen die folgenden Formeln I, II und III auf: 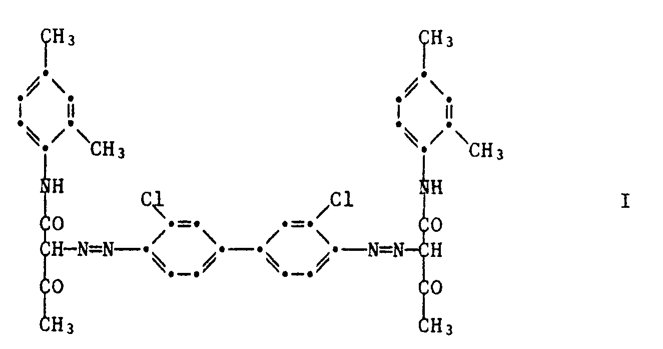 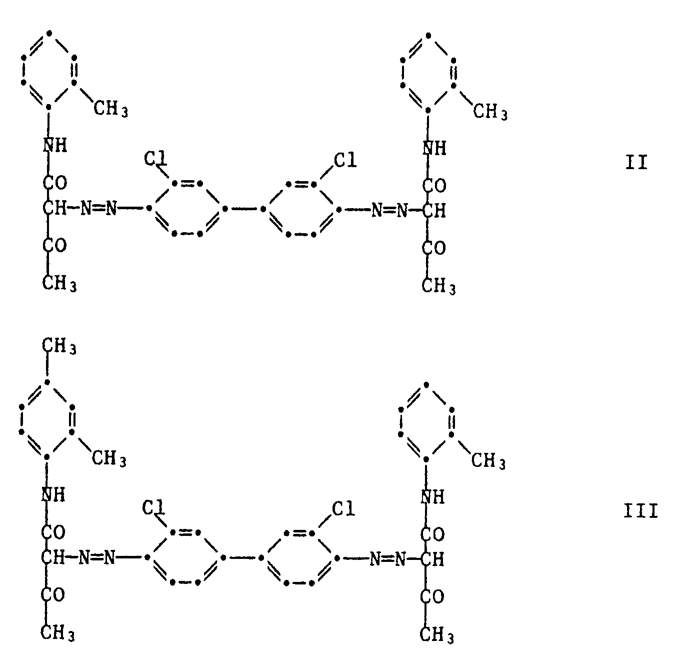
Pigment I ist Pigment Gelb 13 (C.I. Nr. 21100) und Pigment II ist Pigment Gelb 14 (C.I.Nr. 21095).

Die bevorzugte Farbstoffkomponente A b) leitet sich von tetrazotierter Benzidin-2,2′-disulfonsäure und Acetocet-2,4-xylidid ab und weist die folgende Formel IV auf: 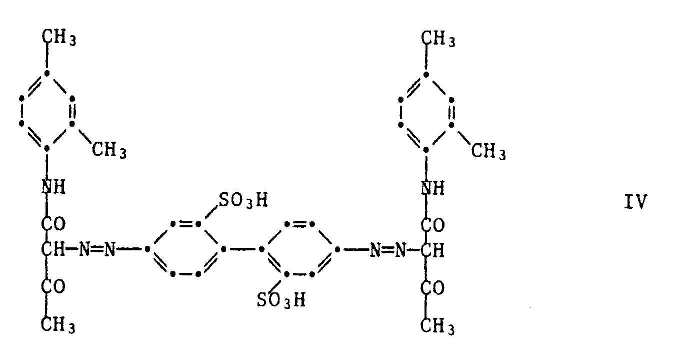
Erfindungsgemäss kann die Komponente A) der Pigmentzusammensetzung gegebenenfalls ein Harz oder harzhaltiges Material enthalten. Beispiele hierfür sind Holzharze und deren Derivate, wie z.B. hydriertes Holzrosin, bevorzugt disproportioniertes Holzrosin, insbesondere teilweise in der Form seines Erdalkalisalzes, insbesondere seines Zinksalzes.

Das Gewichtsverhältnis der Farbstoffkomponente A b) in der gesamten Pigmentkomponente A) ist gering und beträgt 0,5 bis 10 Gew.%, bevorzugt aber 0,75 bis 5 Gew.%, bezogen auf die gesamte Pigmentmenge A).

Die Hauptmenge des Gemisches ist die Pigmentkomponente A a) und beträgt im allgemeinen 50 bis 75 Gew.%, bezogen auf die gesamte Komponente A).

Bedingt durch die Zusammensetzung der Offset- oder Buchdruckfarbe, in welcher die erfindungsgemässe Zusammensetzung eingearbeitet ist, kann die Komponente A a) von 15 bis 45, bevorzugt von 25 bis 40 Gew.% der Harzkomponente A c), insbesondere aber eine im wesentlichen 50:50 Mischung (Gewichtsteile) des disproportionierten Holzrosins als freier Säure und des disproportionierten Holzrosins als Salz enthalten.

Die bevorzugte Pigmentkomponente B a) der erfindungsgemässen Pigmentzusammensetzung leitet sich von tetrazoziertem 3,3′-Dichlorbenzidin und Acetoacetanilid ab und weist die folgende Formel V auf; 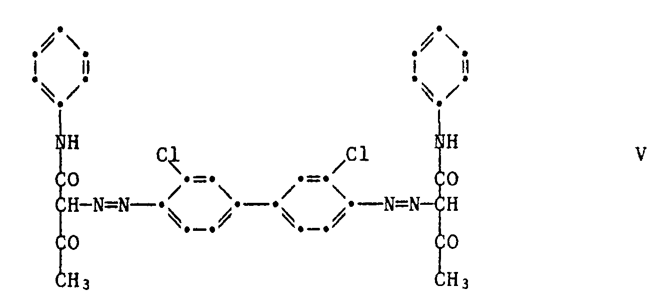
Dieses Pigment entspricht Pigment Gelb 12 (C.I. NR. 21090).

Aminkomponenten B b) der erfindungsgemässen Stoffzusammensetzungen sind z.B. primäre Amine, wie Stearylamin, ferner Rosinamine, wie z.B. Holzrosinderivate (z.B. unter dem Handelsnamen ®Rosin Amine D erhältlich), N-langkettige Alkylalkylidendiamine (z.B. unter dem Handelsnamen ®DUOMEEN erhältlich), Polyamine, wie N-Kokostrimethylendiamin-N′-propylamin, Polyamid-/Polyaminderivate (z.B. unter dem Handelsnamen ®MERGINAMID erhältlich), β-Amine (z.B. unter dem Handelsnamen ®ARMEEN L 11 und DUOMEEN L 15 erhältlich), äthoxylierte Fettamine und Fettdiamine (z.B. unter dem Handelsnamen ®ETHOMEEN und ®ETHODUOMEEN erhältlich), sowie Salze dieser Amine einschliesslich quaternäre Ammoniumsalze (z.B. unter dem Handelsnamen ®ARQUAD, ®DUOQUAD, ®ETHOQUAD erhältlich). Bevorzugte Aminkomponenten B b) sind die N-Alkyl-N-propylendiamine.

Zur guten Kontrolle der Produktezusammensetzung ist es vorteilhaft, die Komponenten A) und B), gegebenenfalls zusammen mit der bevorzugten Resinierung der Komponente A), separat herzustellen, wobei sie danach im gewünschten Verhältnis gemischt werden.

Wie oben bereits aufgeführt, sind die erfindungsgemässen Pigmentzusammensetzungen zum Einarbeiten in Offset- und Buchdruckfarben besonders geeignet, wobei sie ausgezeichnete hohe Pigmentladefähigkeit (bis auf 55 Gew.% Pigment) bei guter Rheologie unter anwendungstechnischen Druckfarbenbedingungen, sowie gute Druck- und koloristische Eigenschaften, aufweisen.

Moderne Methoden zur Bereitstellung von Offset- und Buchdruckfarben sind z.B. die folgenden:
Die Tinte wird auf eine Art und Weise vorbereitet, dass z.B. in einer Kugelmühle zuerst ein Konzentrat auf Lösungsmittelbasis und enthaltend ein Hyperdispergierungsmittel, ein Harz und eine hohe Pigmentladung (35-50 Gew.%) hergestellt wird.

Typische Bestandteile des Konzentrates sind:
1) Das Lösungsmittel bildet mindestens 50 Gew.% der Tinte und enthält üblicherweise hauptsächlich eine aliphatische Kohlenwasserstoff-Destillatfraktion mit Siedepunkten zwischen 240 und 310°C;
2) Das Hyperdispergierungsmittel beträgt 0 bis 10 Gew.% der Tinte und leitet sich von z.B. Poly(12-hydroxystearinsäure) und Dimethylaminopropylamin in einer organischen Flüssigkeit, z.B. Toluol, ab, wie in der US-Patentschrift Nr. 4.461.647 beschrieben;
3) Harze bilden 0-20 Gew.% der Tinte und enthalten z.B. ein Alkydharz, ein mit Rosin modifiziertes phenolisches Harz oder einen Rosinester; und
4) Das Pigment.

Dieses Konzentrat wird dann mit geeigneten Firnissen zur Enddruckfarbenkomposition mit geeigneten charakteristischen Eigenschaften, z.B. einem Pigmentgehalt von 10-15 Gew.%, für das Druckverfahren eingestellt.

Eingehendere Details über derartige Formulierungen sind in "Printing Ink Formulations", E.W. Flick, z.B. S. 110 und 117, (Noyes Publications 1985) beschrieben.

Die folgende Beispiele illustrieren die Erfindung.

Beispiel 1 A: Eine aus 220 g 3,3′-Dichlorbenzidin hergestellte wässrige Tetrazolösung wird mit einer Suspension enthaltend 250 g Acetoacet-2,4-xylidid und 100 g Acetoacet-2-toluidid bei pH 4,5-5,0 zur Kupplung versetzt. Die erhaltene Pigmentsuspension wird neutralisiert, und eine Lösung enthaltend 12,5 g eines wasserlöslichen Azofarbstoffes (durch Tetrazotierung von Benzidin-2,2′-disulfonsäure und anschliessende Kupplung mit Acetoacet-2,4-xylidid hergestellt) wird zu dieser Suspension gegeben. Dann wird eine wässrige Lösung enthaltend 260 g disproportioniertes Holzrosin (als Na-Salz) zugegeben. Das Gemisch wird auf 95°C geheizt, bei dieser Temperatur während 60 Minuten gehalten und dann abfiltriert. Das erhaltene Pigment wird mit Wasser frei von Verunreinigungen gewaschen und bei 70°C getrocknet.

Beispiel 1 B: Eine aus 300 g 3,3′-Dichlorbenzidin hergestellte wässrige Tetrazolösung wird mit 450 g Acetoacetanilid gekuppelt. Die erhaltene Suspension wird dann in einer wässrigen Lösung enthaltend 140 g eines Alkylaminopropylamins (als Acetatsalz; ®DINORAM 42, wobei der Alkylrest hauptsächlich zwischen 18 und 22 C-Atome enthält) suspendiert, wobei der pH bei 4,5 gehalten wird. Nach Beendigung der Kupplung wird der pH auf 11,7 eingestellt, und das Gemisch wird auf 95°C erwärmt und bei dieser Temperatur während 60 Minuten gehalten. Das erhaltene Pigment wird durch Filtration isoliert, mit Wasser frei von Verunreinigungen gewaschen und bei 80°C getrocknet.

Beispiel 1 C: Gleiche Gewichtsmengen, wie gemäss Beispiel 1 A und Beispiel 1 B erhalten, werden gemischt und liefern ein gelbes Pulver.

Beispiel 2:
A) Eine Dispersion folgender Zusammensetzung wird vorbereitet:

| | |
|---|---|
| Kohlenwasserstoffharz (®Hercur A 120) | 8,5 g |
| Alkydharz (®Terlon 3) | 1,5 g |
| ®Solsperse 17000 | 2,5 g |
| ®Solsperse 22000 | 2,5 g |
| Aliphatisches Kohlenwasserstoffdestillat (Siedepunktsbereich 260-290°C) | 85,0 g |

B) 35 Gew.%, bezogen auf die Gesamtmenge obiger Dispersion 2 A, der Pigmentzusammensetzung gemäss Beispiel 1 C werden in einer Kugelmühle in der obigen Dispersion dispergiert, worauf daraus eine Druckfarbe durch Zusatz eines Offset-Firnisses (Lösung eines rosinmodifizierten Phenolharzes und eines Alkydharzes in einem aliphatischen Kohlenwasserstoffdestillat) hergestellt wird.

Die so erhaltenen Druckfarben weisen folgende Eigenschaften auf:

| Beispiele/Pigmente | Dispersion (mikroskopische Beurteilung) | Fliessververhalten in der Kugelmühle | Offset-Verhalten | Farbstärke gegenüber 1 C |
|---|---|---|---|---|
| 1 A | gut | knapp flüssig | gut | farbschwächer (*) |
| 1 B | leicht schlechter als 1 A | flüssig | unbrauchbar | farbschwächer (*) |
| 1 C | leicht besser als 1 A | sehr flüssig | gut | (*) |

| | | | | |
|---|---|---|---|---|
| (*) Beispiele 1 A und 1 B benötigen 120 resp. 130 Teile Pigment 1 A resp. 1 B, um eine Drucktinte gleicher Farbstärke wie diejenige der mit 100 Teilen Pigment 1 C hergestellten Drucktinte zu erhalten. Dies beweist, dass die beiden Komponenten 1 A und 1 B, wenn separat verwendet, deutlich farbschwächer sind als wenn sie zusammen verwendet werden. | | | | |

Beispiel 3: Eine aus 175 g 3,3′-Dichlorbenzidin hergestellte wässrige Tetrazolösung wird mit einer Suspension enthaltend 285 g Acetoacet-2,4-xylidid und 29,4 g des gemäss Beispiel 1 B erhaltenen Produktes versetzt, wobei der pH bei 4,5-5,0 gehalten wird. 75 g Acetoacet-2-chloranilid und dann eine aus 44 g 3,3′-Dichlorbenzidin hergestellte Tetrazolösung werden zugegeben. Die so erhaltene Pigmentsuspension wird neutralisiert. Dazu werden zuerst eine Lösung enthaltend 11,9 g eines Azofarbstoffes (duch Kupplung tetrazotierter Benzidin-2,2′-disulfonsäure mit Acetoacet-2,4-xylidid hergestellt) dann eine wässrige alkalische Lösung enthaltend 200 g ®Staybelitresin (als Na-Salz) zugegeben. Das erhaltene Gemisch wird auf 95°C erwärmt, worauf zuerst eine wässrige Lösung enthaltend 19,6 g CaCl₂ dann verdünnte Salzsäure bis auf pH 5,5 zugegeben werden. Das Gemisch wird bei 90-95°C während 60 Minuten gehalten, und das Produkt wird durch Filtration isoliert, mit Wasser frei von wasserlöslichen Verunreinigungen gewaschen und bei 80°C getrocknet.

Beispiel 4: 44 g 3,3′-Dichlorbenzidin werden tetrazotiert und mit 75 g Acetoacet-2-chloranilid bei pH 4,5-5,0 in Gegenwart von 29 g des gemäss Beispiel 1B erhaltenen Produktes gekuppelt. 285 g Acetoacet-2,4-xylidid dann eine aus 175 g 3,3′-Dichlorbenzidin hergestellte Tetrazolösung werden dieser Pigmentsuspension zugegeben, wobei der pH bei 4,5-5,0 gehalten wird. Danach wird der pH auf 7,0 eingestellt, und Lösungen enthaltend einerseits den aus tetrazotierter Benzidin-2,2′-disulfonsäure durch Kupplung mit Acetoacet-2,4-xylidid erhaltenen Farbstoff und andererseits eine wässrige alkalische Lösung enthaltend 200 g ®Staybelitresin (als Na-Salz) werden zugegeben.

Das erhaltene Gemisch wird auf 95°C erwärmt, worauf 19,6 g CaCl₂ als wässrige Lösung, dann verdünnte Salzsäure bis auf pH 5,5 zugegen werden. Man rührt bei 90-95°C während 60 Minuten weiter, filtriert das gelbe Pigment ab, wäscht es mit Wasser frei von wasserlöslichen Salzen und trocknet es bei 70°C.

Beispiel 5: Produkt A wird gleich wie im Beispiel 1A hergestellt, jedoch wird das Produkt als wässrige Suspension behalten.

Produkt B wird gemäss Beispiel 1B hergestellt, mit dem einzigen Unterschied jedoch, dass 488 g des Alkylaminopropylamins (anstelle von 140 g) eingesetzt werden, und dass das Produkt als wässriger Presskuchen behalten wird.

Eine Suspension enthaltend 88,2 g des Produktes A wird mit einer Suspension enthaltend 11,8 g des Produktes B gemischt. Das erhaltene Produkt wird durch Filtration isoliert, mit Wasser frei von wasserlöslichen Verunreinigungen gewaschen und bei 70°C getrocknet.

Beispiel 6: Beispiel 5 wird mit dem einzigen Unterschied wiederholt, dass die erste Suspension 80,3 g des Produktes A und die zweite Suspension 19,7 g des Produktes B enthalten.

Beispiel 7: Produkt A entspricht dem Produkt A gemäss Beispiel 5. Produkt C wird gemäss Beispiel 1B hergestellt, wobei aber 868 g des Alkylaminopropylamins (anstelle von 140 g) verwendet werden und das Produkt als wässriger Presskuchen behalten wird.

Eine Suspension enthaltend 94,1 g des Produktes A wird mit einer Suspension enthaltend 5,9 g des Produktes C gemischt, und das erhaltene Pigment wird durch Filtration isoliert, gewaschen und bei 80°C getrocknet.

Beispiel 8: Beispiel 7 wird mit dem einzigen Unterschied wiederholt, dass eine Suspension enthaltend 90,1 g des Produktes A mit einer Suspension enthaltend 9,9 g des Produktes C gemischt wird.

Beispiel 9: Ein nach Beispiel 1A hergestelltes Produkt und ein nach Beispiel 1B hergestelltes Produkt werden in gleichen Gewichtsverhältnissen gemischt, mit dem einzigen Unterschied jedoch, dass 70 g des Alkylaminopropylamins (anstelle von 140 g) verwendet werden.

Beispiel 10: Ein nach Beispiel 1A hergestelltes Produkt und ein nach Beispiel 1B gewonnenes Produkt werden in gleichen Gewichtsverhältnissen mit dem einzigen Unterschied gemischt, dass 35 g des Alkylaminopropylamins (anstelle von 140 g) verwendet werden.

Beispiel 11: Ein nach Beispiel 1A hergestelltes Produkt und ein nach Beispiel 1B hergestelltes Produkt werden in gleichen Gewichtsverhältnissen mit dem einzigen Unterschied gemischt, dass anstelle von 140 g des Alkylaminopropylamins 140 g ®TRINORAM S (N-Alkyldipropylentriamin enthaltend im Alkylrest hauptsächlich zwischen 16 und 18 C-Atome) eingesetzt werden.

Beispiel 12: Ein nach Beispiel 1A hergestelltes Produkt und ein nach Beispiel 1B hergestelltes Produkt werden in gleichen Gewichtsverhältnissen mit dem einzigen Unterschied gemischt, dass anstelle von 140 g des Alkylaminopropylamins 140 g ®POLYRAM S (N-Alkylpolypropylenpolyamin enthaltend im Alkylrest hauptsächlich zwischen 16 und 18 C-Atome) verwendet werden.

## Patentansprüche (Patentansprüche für folgende(n) Vertragsstaat(en): DE, FR, GB, IT)

1. Pigmentzusammensetzung zur Verwendung in modernen Offset- und Buchdruchfarben und enthaltend ein Gemisch der Pigmentkomponenten A) und B), worin Pigmentkomponente
A)
a) ein Pigment, das durch Kupplung von tetrazotiertem 3,3'-Dichlorbenzidin mit Acetoacet-2,4-xylidid oder von tetrazotiertem 3,3'-Dichlorbenzidin mit zwei oder mehreren der folgenden Kupplungskomponenten Acetoacetanilid, Acetoacet-2-anisidid, Acetoacet-2-toluidid, Acetoacet-2-chloranilid, Acetoacet-2,4-xylidid und Acetoacet-2,5-dimethoxy-4-chloranilid erhalten wird,
b) einen durch Kupplung tetrazotierter Benzidin-2,2'-disulfonsäure mit Acetoacetanilid, Acetoacet-2-toluidid, Acetoacet-2-chloranilid oder Acetoacet-2,4-xylidid erhaltenen Farbstoff, und gegebenenfalls
c) ein Harz oder harzhaltiges Material enthält, und worin Pigmentkomponente
B)
a) ein Pigment, das durch Kupplung einer oder mehreren der folgenden Kupplungskomponenten Acetoacetanilid, Acetoacet-2-anisidid, Acetoacet-2-toluidid, Acetoacet-4-toluidid, Acetoacet-2-chloranilid, Acetoacet-2,4-xylidid und Acetoacet-2,5-dimethoxy-4-chloranilid mit einer oder beiden der tetrazotierten Komponenten 3,3'-Dichlorbenzidin und 3,3'-Dimethoxybenzidin erhalten wird, und
b) ein aliphatisches Amin enthält,
wobei das Gewichtsverhältnis der Komponenten A) und B) in der Pigmentzusammensetzung zwischen 35:65 und 95:5 Gew.% liegt.

2. Pigmentzusammensetzung gemäss Anspruch 1, wobei das Gewichtsverhältnis der Komponenten A) und B) zwischen 40:60 und 60:40 Gew.% liegt.

3. Pigmentzusammensetzung gemäss Anspruch 1, wobei die Pigmentkomponente A das Kupplungsprodukt aus tetrazotiertem 3,3'-Dichlorbenzidin mit dem Gemisch Acetoacet-o-toluidid und Acetoacet-2,4-xylidid ist.

4. Pigmentzusammensetzung gemäss Anspruch 1, wobei die Farbstoffkomponente A b) das Kupplungsprodukt aus tetrazotierter Benzidin-2,2'-disulfonsäure mit Acetoacet-2,4-xylidid ist.

5. Pigmentzusammensetzung gemäss Aspruch 1, wobei die Pigmentkomponente A a) ein Harz oder ein harzhaltiges Material enthält.

6. Pigmentzusammensetzung gemäss Anspruch 5, wobei das Harz oder das harzhaltige Material Holzrosin oder ein Derivat davon, oder ein Polyamidharz ist.

7. Pigmentzusammensetzung gemäss Anspruch 1, wobei das Verhältnis der Farbstoffkomponente A b) in der gesamten Pigmentkomponente A) 0,5 bis 10 Gew.% beträgt.

8. Pigmentzusammensetzung gemäss Anspruch 7, wobei das Gewichtsverhältnis der Farbstoffkomponente A b) zwischen 0,75 und 5 Gew.% liegt.

9. Pigmentzusammensetzung gemäss Anspruch 1, wobei die Menge der Pigmentkomponente A a) 50 bis 75 Gew.% der Gesamtmenge der Pigmentkomponente A) beträgt.

10. Pigmentzusammensetzung gemäss Anspruch 1, wobei die Harzkomponente A c) 15 bis 45 Gew.% der Gesamtmenge der Komponente A) beträgt.

11. Pigmentzusammensetzung gemäss Anspruch 1, wobei die Pigmentkomponente B a) Pigment Gelb 12 ist.

12. Pigmentzusammensetzung gemäss Anspruch 1, wobei die Aminkomponente B b) ein N-Alkyl-N-propylendiamin ist.

13. Verfahren zur Herstellung einer Pigmentzusammensetzung gemäss Anspruch 1, dadurch gekennzeichnet, dass
a) die Pigmentkomponenten A) und B) gemäss Anspruch 1 getrennt hergestellt werden, und dann
b) diese beiden Pigmentkomponenten A) und B) im gemäss Anspruch 1 definierten Gewichtsverhältnis gemischt werden.

14. Für Offset- und Buchdruckfarben geeignetes Druckfarbenkonzentrat enthaltend eine Pigmentzusammensetzung gemäss Anspruch 1.

15. Offset- oder Buchdruckfarbe enthaltend eine Pigmentzusammensetzung gemäss Anspruch 1.

## Patentansprüche (Patentansprüche für folgende(n) Vertragsstaat(en): ES)

1. Verfahren zur Herstellung einer Pigmentzusammensetzung zur Verwendung in modernen Offset- und Buchdruckfarben und enthaltend ein Gemisch der Pigmentkomponenten A) und B), worin Pigmentkomponente
A)
a) ein Pigment, das durch Kupplung von tetrazotiertem 3,3'-Dichlorbenzidin mit Acetoacet-2,4-xylidid oder von tetrazotiertem 3,3'-Dichlorbenzidin mit zwei oder mehreren der folgenden Kupplungskomponenten Acetoacetanilid, Acetoacet-2-anisidid, Acetoacet-2-toluidid, Acetoacet-2-chloranilid, Acetoacet-2,4-xylidid und Acetoacet-2,5-dimethoxy-4-chloranilid erhalten wird,
b) einen durch Kupplung tetrazotierter Benzidin-2,2'-disulfonsäure mit Acetoacetanilid, Acetoacet-2-toluidid, Acetoacet-2-chloranilid oder Acetoacet-2,4-xylidid erhaltenen Farbstoff, und gegebenenfalls
c) ein Harz oder harzhaltiges Material enthält, und worin Pigmentkomponente
B)
a) ein Pigment, das durch Kupplung einer oder mehreren der folgenden Kupplungskomponenten Acetoacetanilid, Acetoacet-2-anisidid, Acetoacet-2-toluidid, Acetoacet-4-toluidid, Acetoacet-2-chloranilid, Acetoacet-2,4-xylidid und Acetoacet-2,5-dimethoxy-4-chloranilid mit einer oder beiden der tetrazotierten Komponenten 3,3'-Dichlorbenzidin und 3,3'-Dimethoxybenzidin erhalten wird, und
b) ein aliphatisches Amin enthält,
wobei das Gewichtsverhältnis der Komponenten A) und B) in der Pigmentzusammensetzung zwischen 35:65 und 95:5 Gew.% liegt und die Pigmentkomponenten A) und B) getrennt hergestellt und dann gemäss dem oben definierten Gewichtsverhältnis gemischt werden.

2. Verfahren gemäss Anspruch 1, wobei das Gewichtsverhältnis der Komponenten A) und B) zwischen 40:60 und 60:40 Gew.% liegt.

3. Verfahren gemäss Anspruch 1, wobei die Pigmentkomponente A das Kupplungsprodukt aus tetrazotiertem 3,3'-Dichlorbenzidin mit dem Gemisch Acetoacet-o-toluidid und Acetoacet-2,4-xylidid ist.

4. Verfahren gemäss Anspruch 1, wobei die Farbstoffkomponente A b) das Kupplungsprodukt aus tetrazotierter Benzidin-2,2′-disulfonsäure mit Acetoacet-2,4-xylidid ist.

5. Verfahren gemäss Aspruch 1, wobei die Pigmentkomponente A) ein Harz oder ein harzhaltiges Material A c) enthält.

6. Verfahren gemäss Anspruch 5, wobei das Harz oder das harzhaltige Material Holzrosin oder ein Derivat davon, oder ein Polyamidharz ist.

7. Verfahren gemäss Anspruch 1, wobei das Verhältnis der Farbstoffkomponente A b) in der gesamten Pigmentkomponente A) 0,5 bis 10 Gew.% beträgt.

8. Verfahren gemäss Anspruch 7, wobei das Gewichtsverhältnis der Farbstoffkomponente A b) zwischen 0,75 und 5 Gew.% liegt.

9. Verfahren gemäss Anspruch 1, wobei die Menge der Pigmentkomponente A a) 50 bis 75 Gew.% der Gesamtmenge der Pigmentkomponente A) beträgt.

10. Verfahren gemäss Anspruch 1, wobei die Harzkomponente A c) 15 bis 45 Gew.% der Gesamtmenge der Komponente A) beträgt.

11. Verfahren gemäss Anspruch 1, wobei die Pigmentkomponente B a) Pigment Gelb 12 ist.

12. Verfahren gemäss Anspruch 1, wobei die Aminkomponente B b) ein N-Alkyl-N-propylendiamin ist.

13. Verfahren zur Herstellung einer Pigmentzusammensetzung gemäss Anspruch 1 zur Verwendung als Druckfarbenkonzentrat für Offset- und Buchdruckfarben.

14. Verfahren zur Herstellung einer Pigmentzusammensetzung gemäss Anspruch 1 zur Verwendung als Offset- oder Buchdruckfarbe.

## Claims (Claims for the following Contracting State(s): DE, FR, GB, IT)

1. A pigment composition, suitable for use in modern offset and letterpress printing inks and comprising a mixture of the pigment components A) and B), wherein pigment component A) comprises
a) a pigment obtained by coupling tetrazotised 3,3'-dichlorobenzidine with acetoacet-2,4-xylidide or coupling tetrazotised 3,3'-dichlorobensidine with two or more of the following coupling components: acetoacetanilide, acetoacet-2-anisidide, acetoacet-2-toluidide, acetoacet-2-chloranilide, acetoacet-2,4-xylidide and acetoacet-2,5-dimethoxy-4-chloranilide,
b) a dyestuff obtained by coupling tetrazotised benzidine-2,2'-disulfonic acid with acetoacetanilide, acetoacet-2-toluidide, acetoacet-2-chloranilide or acetoacet-2,4-xylidide, and optionally
c) a resin or resinous material,
and wherein pigment component B) comprises
a) a pigment obtained by coupling one or more of the following coupling components: acetoacetanilide, acetoacet-2-anisidide, acetoacet-2-toluidide, acetoacet-4-toluidide, acetoacet-2-chloranilide, acetoacet-2,4-xylidide and acetoacet-2,5-dimethoxy-4-chloranilide with one or both of the tetrazotised components 3,3'-dichlorobenzidine and 3,3'-dimethoxybenzidine; and
b) an aliphatic amine,
the weight ratio of components A) and B) in the pigment composition being between 35:65 and 95:5 % by weight.

2. A pigment composition according to claim 1, wherein the weight ratio of components A) and B) is between 40:60 and 60:40 % by weight.

3. A pigment composition according to claim 1, wherein the pigment component A) is the product of coupling tetrazotised 3,3'-dichlorobenzidine with a mixture of acetoacet-o-toluidide and acetoacet-2,4-xylidide.

4. A pigment composition according to claim 1, wherein the dyestuff component A b) is the product of coupling tetrazotised benzidine-2,2'-disulfonic acid with acetoacet-2,4-xylidide.

5. A pigment composition according to claim 1, wherein the pigment component A a) contains a resin or a resinous material.

6. A pigment composition according to claim 5, wherein the resin or the resinous material is wood rosin or a derivative thereof, or is a polyamide resin.

7. A pigment composition according to claim 1, wherein the proportion of the dyestuff component A b) in the total pigment component A) is from 0.5 to 10 % by weight.

8. A pigment composition according to claim 7, wherein the proportion by weight of the dyestuff component A b) is between 0.75 and 5 % by weight.

9. A pigment composition according to claim 1, wherein the amount of the pigment component A a) is from 50 to 75 % by weight of the total amount of the pigment component A).

10. A pigment composition according to claim 1, wherein the resin component A c) is from 15 to 45 % by weight of the total amount of the component A).

11. A pigment composition according to claim 1, wherein the pigment component B a) is Pigment Yellow 12.

12. A pigment composition according to claim 1, wherein the amine component B b) is an N-alkyl-N-propylenediamine.

13. A process for producing a pigment composition according to claim 1, which comprises
a) preparing separately the pigment components A) and B), according to claim 1, and then
b) mixing these two pigment components A) and B) in the weight ratio defined in claim 1.

14. A printing ink concentrate suitable for offset and letterpress printing inks, comprising a pigment composition according to claim 1.

15. An offset or letterpress printing ink comprising a pigment composition according to claim 1.

## Claims (Claims for the following Contracting State(s): ES)

1. A process for producing a pigment composition, suitable for use in modern offset and letterpress printing inks and comprising a mixture of the pigment components A) and B), wherein pigment component A) comprises
a) a pigment obtained by coupling tetrazotised 3,3'-dichlorobenzidine with acetoacet-2,4-xylidide or coupling tetrazotised 3,3'-dichlorobenzidine with two or more of the following coupling components: acetoacetanilide, acetoacet-2-anisidide, acetoacet-2-toluidide, acetoacet-2-chloranilide, acetoacet-2,4-xylidide and acetoacet-2,5-dimethoxy-4-chloranilide,
b) a dyestuff obtained by coupling tetrazotised benzidine-2,2'-disulfonic acid with acetoacetanilide, acetoacet-2-toluidide, acetoacet-2-chloranilide or acetoacet-2,4-xylidide, and optionally
c) a resin or resinous material,
and wherein pigment component B) comprises
a) a pigment obtained by coupling one or more of the following coupling components: acetoacetanilide, acetoacet-2-anisidide, acetoacet-2-toluidide, acetoacet-4-toluidide, acetoacet-2-chloranilide, acetoacet-2,4-xylidide and acetoacet-2,5-dimethoxy-4-chloranilide with one or both of the tetrazotised components 3,3'-dichlorobenzidine and 3,3'-dimethoxybenzidine; and
b) an aliphatic amine,
the weight ratio of components A) and B) in the pigment composition being between 35:65 and 95:5 % by weight. A) and B) are prepared separately and then mixed in the weight ratio defined above.

2. A process according to claim 1, wherein the weight ratio of components A) and B) is between 40:60 and 60:40 % by weight.

3. A process according to claim 1, wherein the pigment component A) is the product of coupling tetrazotised 3,3'-dichlorobenzidine with a mixure of acetoacet-o-toluidide and acetoacet-2,4-xylidide.

4. A process according to claim 1, wherein the dyestuff component A b) is the product of coupling tetrazotised benzidine-2,2'-disulfonic acid with acetoacet-2,4-xylidide.

5. A process according to claim 1, wherein the pigment component A) contains a resin or a resinous material A c).

6. A process according to claim 5, wherein the resin or the resinous material is wood rosin or a derivative thereof, or is a polyamide resin.

7. A process according to claim 1, wherein the proportion of the dyestuff component A b) in the total pigment component A) is from 0.5 to 10 % by weight.

8. A process according to claim 7, wherein the proportion by weight of the dyestuff component A b) is between 0.75 and 5 % by weight.

9. A process according to claim 1, wherein the amount of the pigment component A a) is from 50 to 75 % by weight of the total amount of the pigment component A).

10. A process according to claim 1, wherein the resin component A c) is from 15 to 45 % by weight of the total amount of the component A).

11. A process according to claim 1, wherein the pigment component B a) is Pigment Yellow 12.

12. A process according to claim 1, wherein the amine component B b) is an N-alkyl-N-propylenediamine.

13. A process for producing a pigment composition according to claim 1 for use as a printing ink concentrate for offset and letterpress printing inks.

14. A process for producing a pigment composition according to claim 1 for use as an offset or letterpress printing ink.

## Revendications (Revendications pour l'(les) Etat(s) contractant(s) suivant(s): DE, FR, GB, IT)

1. Composition pigmentaire en vue d'une utilisation pour des encres modernes d'impression offset et d'imprimerie-typographie et contenant un mélange des composants pigmentaires A) et B), dans laquelle le composant pigmentaire A) contient
a) un pigment obtenu par copulation de la 3,3'-dichlorobenzidine tétrazotée avec l'acétoacéto-2,4-xylidide ou de la 3,3'-dichlorobenzidine tétrazotée avec deux composants de copulation ou plus suivant : l'acétoacétanilide, l'acétoacéto-2-anisidide, l'acétoacéto-2-toluidide, l'acétoacéto-2-chloranilide, l'acétoacéto-2,4-xylidide et l'acétoaceto-2,5-diméthoxy-4-chloranilide,
b) un colorant obtenu par copulation de l'acide benzidine-2,2'-disulfonique tétrazoté avec l'acétoacétanilide, l'acétoacéto-2-toluidide, l'acétoacéto-2-chloranilide ou l'acétoacéto-2-xylidide, et le cas échéant
c) une résine ou une matière résineuse,
et dans laquelle le composant pigmentaire B) contient
a) un pigment obtenu par copulation d'un ou de plusieurs composants de copulation suivant : l'acétoacétanilide, l'acétoacéto-2-anisidide, l'acétoacéto-2-toluidide, l'acétoacéto-4-toluidide, l'acétoacéto-2-chloranilide, l'acétoacéto-2,4-xylidide et l'acétoacéto-2,5-diméthoxy-4-chloranilide, avec un ou deux composants tétrazotés de la 3,3'-dichlorobenzidine et la 3,3'-diméthoxybenzidine, et
b) une amine aliphatique,
le rapport pondéral entre les composants A) et B) dans la composition pigmentaire étant compris entre 35:65 et 95:5 % en poids.

2. Composition pigmentaire selon la revendication 1 dont le rapport pondéral entre les composants A) et B) est compris entre 40:60 et 60:40 % en poids.

3. Composition pigmentaire selon la revendication 1 dont le composant pigmentaire A est le produit de copulation de la 3,3'-dichlorobenzidine tétrazotée avec le mélange de l'acétoacéto-o-toluidide et de l'acétoacéto-2,4-xylidide.

4. Composition pigmentaire selon la revendication 1 dont le composant colorant A b) est le produit de copulation de l'acide benzidine-2,2'-disulfonique tétrazoté avec l'acétoacéto-2,4-xylidide.

5. Composition pigmentaire selon la revendication 1 dont le composant pigmentaire A a) contient une résine ou une matière résineuse.

6. Composition pigmentaire selon la revendication 5 dans laquelle la résine ou la matière résineuse est une colophane de bois ou un dérivé de celle-ci ou bien une résine de polyamide.

7. Composition pigmentaire selon la revendication 1 dans laquelle la proportion du composant colorant A b) dans la totalité de la composante pigmentaire A) est de 0,5 à 10 % en poids.

8. Composition pigmentaire selon la revendication 7 dans laquelle la proportion pondérale du composant colorant A b) comprise entre 0,75 à 5 % en poids.

9. Composition pigmentaire selon la revendication 1 dans laquelle la proportion du composant pigmentaire A a) est de 50 à 75 % en poids de la quantité totale du composant pigmentaire A).

10. Composition pigmentaire selon la revendication 1 dans laquelle le composant résineux A c) représente de 15 à 45 % du poids total du composant A).

11. Composition pigmentaire selon la revendication 1 dans laquelle la composante pigmentaire B a) est le pigment jaune "Gelb 12".

12. Composition pigmentaire selon la revendication 1 dans laquelle le composant amine B b) est une N-alkyl-N-propylène-diamine.

13. Procédé de préparation d'une composition pigmentaire selon la revendication 1 caractérisé en ce que :
a) on prépare séparément les composants pigmentaires A) et B) de la revendication 1 et ensuite
b) on mélange ces deux composants pigmentaires A) et B) dans le rapport pondéral défini conformément à la revendication 1.

14. Concentré d'encre d'impression pour encres d'impression offset et d'imprimerie, qui comprend une composition pigmentaire selon la revendication 1.

15. Encres d'impression offset et d'imprimerie contenant une composition pigmentaire selon la revendication 1.

## Revendications (Revendications pour l'(les) Etat(s) contractant(s) suivant(s): ES)

1. Procédé de préparation d'une composition pigmentaire en vue d'une utilisation pour des encres modernes d'impression offset et d'imprimerie-typographie et contenant un mélange des composants pigmentaires A) et B), dans laquelle le composant pigmentaire A) contient
a) un pigment obtenu par copulation de la 3,3'-dichlorobenzidine tétrazotée avec l'acétoacéto-2,4-xylidide ou de la 3,3'-dichlorobenzidine tétrazotée avec deux composants de copulation ou plus suivant : l'acétoacétanilide, l'acétoacéto-2-anisidide, l'acétoacéto-2-toluidide, l'acétoacéto-2-chloranilide, l'acétoacéto-2,4-xylidide et l'acétoacéto-2,5-diméthoxy-4-chloranilide,
b) un colorant obtenu par copulation de l'acide benzidine-2,2'-disulfonique tétrazoté avec l'acétoacétanilide, l'acétoacéto-2-toluidide, l'acétoacéto-2-chloranilide ou l'acétoacéto-2-xylidide, et le cas échéant
c) une résine ou une matière résineuse,
et dans laquelle le composant pigmentaire B) contient
a) un pigment obtenu par copulation d'un ou de plusieurs composants de copulation suivant : l'acétoacétanilide, l'acétoacéto-2-anisidide, l'acétoacéto-2-toluidide, l'acétoacéto-4-toluidide, l'acétoacéto-2-chloranilide, l'acétoacéto-2,4-xylidide et l'acétoacéto-2,5-diméthoxy-4-chloranilide, avec un ou deux composants tétrazotés de la 3,3'-dichlorobenzidine et la 3,3'-diméthoxybenzidine, et
b) une amine aliphatique,
le rapport pondéral entre les composants A) et B) dans la composition pigmentaire étant compris entre 35:65 et 95:5 % en poids et les composants pigmentaires A) et B) étant préparé séparément et étant alors mélangés selon le rapport pondéral défini ci-dessus.

2. Procédé selon la revendication 1 dans lequel le rapport pondéral entre les composants A) et B) est compris entre 40:60 et 60:40 % en poids.

3. Procédé selon la revendication 1 dans lequel le composant pigmentaire A est le produit de copulation de la 3,3'-dichlorobenzidine tétrazotée avec le mélange de l'acétoacéto-o-toluidide et de l'acétoacéto-2,4-xylidide.

4. Procédé selon la revendication 1 dans lequel le composant colorant A b) est le produit de copulation de l'acide benzidine-2,2'-disulfonique tétrazoté avec l'acétoacéto-2,4-xylidide.

5. Procédé selon la revendication 1 dans lequel le composant pigmentaire A) contient une résine ou une matière résineuse A c).

6. Procédé selon la revendication 5 dans lequel la résine ou la matière résineuse est une colophane de bois ou un dérivé de celle-ci ou bien une résine de polyamide.

7. Procédé selon la revendication 1 dans lequel la proportion du composant colorant A b) dans la totalité du composant pigmentaire A) est de 0,5 à 10 % en poids.

8. Procédé selon la revendication 7 dans lequel la proportion pondérale du composant colorant A b) se situe entre 0,75 à 5 % en poids.

9. Procédé selon la revendication 1 dans lequel la proportion du composant pigmentaire A a) est de 50 à 75 % en poids de la quantité totale du composant pigmentaire A).

10. Procédé selon la revendication 1 dans lequel le composant résineux A c) représente de 15 à 45 % en poids de la quantité totale du composant A).

11. Procédé selon la revendication 1 dans lequel le composant pigmentaire B a) est le pigment jaune "Gelb 12".

12. Procédé selon la revendication 1 dans lequel le composant amine B b) est une N-alkyl-N-propylène-diamine.

13. Procédé de préparation d'une composition pigmentaire selon la revendication 1 pour son utilisation comme concentré d'encre d'impression dans des encres d'impression offset et d'imprimerie.

14. Procédé de préparation d'une composition pigmentaire selon la revendication 1 pour son utilisation comme encre d'impression offset ou d'imprimerie.
